# EUROPÄISCHE PATENTSCHRIFT

(11) **EP 1 358 298 B1**
(45) Veröffentlichungstag und Bekanntmachung des Hinweises auf die Patenterteilung: **08.12.2004**
(21) Anmeldenummer: 02714112.6
(22) Anmeldetag: 25.01.2002
(51) Int. Cl.: C09K 7/06

(54) **ADDITIV FÜR ÖLBASIERTE INVERT-BOHRSPÜLUNGEN**
ADDITIVE FOR OIL-BASED INVERT DRILLING FLUIDS
ADDITIF POUR LIQUIDES DE FORAGE INVERSES A L'HUILE

(30) Priorität: 03.02.2001 DE 10104869
(43) Veröffentlichungstag der Anmeldung: 05.11.2003
(73) Patentinhaber: Cognis Deutschland GmbH & Co. KG, 40589 Düsseldorf (DE)
(72) Erfinder: BURBACH, Frank, 47877 Willich (DE); MÜLLER, Heinz, 40789 Monheim (DE)
(86) Internationale Anmeldenummer: PCT/EP2002/000772
(87) Internationale Veröffentlichungsnummer: WO 2002/062919

(56) Entgegenhaltungen:
- EP-A- 0 399 270
- US-A- 3 108 068
- US-A- 5 985 800
- US-H- H 935
- DATABASE WPI Derwent Publications Ltd., London, GB; AN 1993-212337 [26] XP002204944 & SU 1 745 750 A (MO I NEFTI GAZA), 7. Juli 1992 (1992-07-07)
- DATABASE WPI Derwent Publications Ltd., London, GB; AN 1992-206421 [25] XP002204945 & SU 1 663 005 A (MO I NEFTI GAZA), 15. Juli 1991 (1991-07-15)
- DATABASE WPI Derwent Publications Ltd., London, GB; AN 1989-291479 [40] XP002204946 & SU 1 446 138 A (DN GORNY J I IM ARTEMA), 23. Dezember 1988 (1988-12-23)

## Beschreibung

Die vorliegende Erfindung betrifft Invert-Bohrspülsysteme, die zum Erdreichaufschluß geeignet sind, sowie die Verwendung bestimmter Salze zur Modifizierung der Rheologie derartiger Systeme.

Flüssige Spülsysteme zur Niederbringung von Gesteinsbohrungen unter Aufbringung des abgelösten Bohrkleins sind bekanntlich beschränkt eingedickt fließfähige Systeme auf Wasser- oder auf Ölbasis. Die zuletzt genannten Systeme auf Ölbasis finden in der Praxis zunehmend Bedeutung und werden insbesondere im Bereich der Off-Shore-Bohrung eingesetzt. Bohrspülungen auf Ölbasis werden im allgemeinen als sogenannte Invert-Emulsionsschlämme eingesetzt, die aus einem 3-Phasen-System bestehen: Öl, Wasser und feinteilige Feststoffe. Es handelt sich dabei um Zubereitungen vom Typ der W/O-Emulsionen, d.h. die wässrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorensysteme, Beschwerungsmittel, fluid-loss-Additive, Viskositätsregler sowie ggf. eine Alkalireserve. Zu Einzelheiten wird beispielsweise verwiesen auf die Veröffentlichung P.A. Boyd at al. "New base oil used in low toxicity oil muds"; Journal of Petroleum Technology, 1985, 137-142. Weiterhin sind anorganische Salze enthalten, vorzugsweise Calciumchlorid-dihydrat, welche den Systemen zugesetzt werden, um den osmotischen Druck auf die Formation zu verringern. Wenn der Salzgehalt in der wässerigen Phase der Invert-Spülung zu gering ist kann es durch Wanderung von Wasser aus der Spülung in die Formation zu einer Destabilisierung derselben kommen. Im umgekehrten Fall, der höheren Salzkonzentration in der Wasserphase der Bohrspülung, findet ein Austausch aus der Formation in die Spülung statt, der ein Anschwellen der Formation verhindert und einer Destabilisierung entgegenwirkt. Zu weiteren Einzelheiten wird die Druckschrift "Drilling Fluid Optimization, J.L. Lummus, Penn Well Books, 1986, Kapitel 10" zitiert, deren Offenbarung auch Teil der vorliegenden Anmeldung ist. Dies gilt insbesondere für die Seiten 219 bis 224, wo die Wirkung von Salzen in Bohrspülsystemen beschrieben wird.

In der Regel wird das oben genannte Calciumchlorid zur Erzielung der gewünschten Salinität verwendet. Allerdings führt der hohe Salzgehalt zu starker Korrosion an metallischen Teilen der Förder- und Bohranlagen. Es war daher eine Aufgabe der vorliegenden Erfindung, einen Weg zu finden die Salinität in Invert-Bohrspülungen zu erzeugen, ohne das es zu Korrosionsproblemen kommt. Auch der Deponierung von Bohrklein (cuttings) welche mit üblichen Bohrspülungen kontaminiert sind, treten ökologische Probleme auf, da die Bohrspülungen einen hohen Anteil an unerwünschtem Chlorid enthalten.

Durch Auswahl bestimmte Salze als Ersatzstoffe für Calciumchlorid konnten die oben beschriebenen Nachteile vermieden werden.

Gegenstand der vorliegenden Anmeldung ist in einer ersten Ausführungsform ein Invert-Bohrspülung, enthalten
a) eine kontinuierliche Ölphase,
b) eine in der Ölphase dispers verteilte Wasserphase,
c) mindestens einen Emulgator,
d) mindestens ein Beschwerungsmittel,
e) mindestens ein Fluid-loss Additive,
f) mindestens ein Elektrolyt,
g) mindestens ein Verdicker,
h) optional weitere Additive,
wobei als Elektrolyt f) eine Mischung aus Calciumacetat und Magnesiumacetat enthalten ist.

Die erfindungsgemäßen Invert-Bohrspülsysteme enthalten als Hauptbestandteil die kontinuierliche Ölphase a), welche die sogenannte Carrier-Fluid bildet. Derartige Carrier-Fluids sind beispielsweise aus älteren Schutzrechten der Anmelderin Cognis bereits bekannt, wobei hier insbesondere auf die europäischen Patentanmeldungen 0 374 671, 0 374,672, 0 382 070, 0 386 638 verwiesen wird. Auch Ölphasen auf Basis linearer Olefine sind dem Fachmann bekannt, hier sei die europäische Offenlegungsschrift 0 765 368 erwähnt. Weiterhin können geeignete Bestandteile der Ölphase wasserunlösliche symmetrische oder unsymmetrische Ether aus einwertigen Alkoholen natürlichen oder synthetischen Ursprungs sein, wobei die Alkohole 1 bis 24 C-Atome enthalten können. Derartige Bohrspülsysteme sind Gegenstand der europäischen Anmeldung 0 472 557. Weiterhin sind Kohlensäurediester gemäß der europäischen Anmeldung 0 532 570 geeignete Bestandteile der Ölphase. Diese Verbindungen können sowohl die gesamte Ölphase ausmachen als auch Teile davon. Weiterhin sind beliebige Mischungen der Verbindung i) bis vi) untereinander möglich. Besonders bevorzugt sind allerdings die Carbonsäureester der Formel (I) und hier insbesondere solche, die in der europäischen Offenlegungsschrift EP 0 374 672 bzw. EP 0 386 636 beschrieben werden. Besonders bevorzugt ist im Rahmen der erfindungsgemäßen Lehre, die Verbindungen der Formel (I) in solchen Invert-Bohrspülemuisionen einzusetzen, deren Ölphase a) Ester der Formel (I) enthält, wobei der Rest R' in Formel (I) für einen Alkylrest mit 5 bis 21 C-Atomen steht, vorzugsweise für Alkylreste mit 5 bis 17 und insbesondere Alkylreste mit 11 bis 17 C-Atomen. Besonders geeignete Alkohole in derartigen Estern basieren auf verzweigten oder unverzweigten Alkoholen mit 1 bis 8 C-Atomen, z.B. auf Methanol, Isopropanol, Isobutanol, oder 2-Ethylhexanol. Weiterhin bevorzugt sind Alkohole mit 12 bis 18 C-Atomen. Besonders bevorzugte Ester sind gesättigte C12-C14-Fettsäureester bzw. ungesättigte C16-C18-Fettsäuren, jeweils mit isopropyl-, Isobutyl- oder 2-Ethylhexanol als Alkoholkomponente. Weiterhin geeignet ist das 2-Ethylhyloctanoat. Weitere geeignete Ester sind Essigsäureester, hier besonders Acetale von C8-C18-Fettalkoholen.

Auch verzweigte Ester vom Typ i), wie sie beispielsweise in der WO 99/33932 (Chevron) oder in der EP 0 642 561 (Exxon) offenbart werden, sind geeignete Carrier-Fluids im erfindungsgemäßen Verfahren. die dort offenbarten Ester sind Teil der Offenbarung der vorliegenden Erfindung. Weiterhin bevorzugt sind Abmischungen derartiger bevorzugter Ester untereinander. Die Ölphasen können weiterhin die oben bezeichneten Komponente als Carrier-Fluids enthalten, wobei Alpha-Olefine besonders bevorzugte Mischungsbestandteile seien können. Derartige bevorzugte Mischungen sind Gegenstand der EP 0 765 368 A1 der Anmelderin.

Die Ölphase a) der erfindungsgemäßen Emulsionen setzt sich vorzugsweise zu mind. 50 Gew.-% aus derartigen bevorzugten Verbindungen i) bis vi) zusammen, insbesondere sind solche Systeme bevorzugt, bei denen die Ölphase zu 60 bis 80 % und insbesondere zu 100 Gew.-% aus Verbindungen i) bis vi) oder Mischungen daraus bestehen. Besonders bevorzugt sind solche erfindungsgemäßen Invert-Bohrspülungen, bei denen die kontinuierliche Ölphase a) ganz oder teilweise aus Verbindungen der Klasse i) oder alternativ ii) gebildet wird. Besondere Vorteile kann die Verwendung von beliebigen Mischungen der Ölkomponenten i) und ii) als alleinige Bestandteile der Ölphase aufweisen.

Wasser (Komponente b) ist ebenfalls ein zwingender Bestandteil der beschriebenen Bohrspülsysteme. Das Wasser wird vorzugsweise in Mengen von minimal etwa 0,5 Gew.-% in den Invert-Emulsionen vorhanden sein. Es ist aber bevorzugt, daß mindestens 5 bis 10 Gew.-% Wasser enthalten sind. Es ist vorteilhaft, das Öl/Wasser-Verhältnis (w/w) auf bestimmte, ausgewählte Bereiche einzustellen. Diese liegen vorzugsweise im Bereich von 90 : 10 bis 50 : 50 - Komponente a) zu Komponente b) - vorzugsweise von 90 : 10 bis 70 : 30 und insbesondere von 80 : 20 bis 70 : 30 liegt.

Das Wasser in Bohrspülsystemen der hier beschriebenen Art enthält zum Ausgleich des osmotischen Gefälles zwischen der Bohrspülung und dem Formationswasser immer Anteile von Elektrolyten, wobei erfindungsgemäß Mischungen aus Calciumund Magnesiumacetat eingesetzt werden und auf die Verwendung des üblichen Calciumchlorids (CaCl₂ ^{x} 2 H₂O) oder Natrium-Salze verzichtet werden kann. Ein weiterer Gegenstand der vorliegenden Erfindung betrifft daher die Verwendung einer Mischung aus Calcium- und Magnesiumacetat als Elektrolyt zur Einstellung der Salinität von Invert-Bohrspülungen.

Vorzugsweise werden den erfindungsgemäßen Bohrspülungen nur die erfindungsgemäßen Elektrolytmischungen zugesetzte. Im Rahmen des praktischen Betriebs kommt es aber durch Seewasser oder Formationswasser sowie durch Abreaktion der Alkalireserve Kalk (Lime) zu einer Anreicherung auch von Calciumund Natriumchlorid in der Invert-Bohrspülung. Die Bohrspülungen gemäß der vorliegenden Erfindungen enthalten die Mischung von Ca- bzw. Mg-Acetat vorzugsweise in Mengen von 1 bis 15 Gew.-%, insbesondere von 2 bis 12 und ganz besonders bevorzugt in Mengen von 5 bis 10 Gew.-%. Dabei ist es bevorzugt Ca- und Mg-Acetatmischungen zu verwenden, die Ca- und Mg-Ionen in einem Molverhältnis von 10 : 1 bis 1 : 10 enthalten, vorzugsweise ein Verhältnis von 1 : 1 bis 1 : 10. Es hat sich als vorteilhaft erwiesen daß ein molarer Überschuß an Magnesium in den Acetatmischungen vorliegt. Ein besonders bevorzugtes molares Verhältnis zwischen Magnesium und Calicum liegt bei 3 : 7.
Die eingesetzten Salze können in technischer Qualität verwendet werden, eine besondere Reinheit ist nicht erfindungswesentlich. Der Zusatz von Calcium- / Magnesiumacetat führt a) zu einer Verringerung der Korrosion an den metallischen Teilen, mit denen die Bohrspülung in Kontakt gerät und b) wird die Reinigung des erbohrten Bohrkleins (Cuttings) beim Einsatz der erfindungsgemäß definierten Invert-Emulsionen erleichtert.

Die erfindungsgemäßen Invert-Systeme können optional noch weitere Additive als Hilfs- und Zusatzstoffe enthalten. Vorzugsweise wird eine Alkalireserve mitverwendet, um den pH-Wert des Systems auch beim Einbruch saurer Gase wie CO₂ oder H₂S stabil zu halten. Der pH-Wert sollte dabei im zumindest schwach alkalischen Bereich gehalten werden, vorzugsweise bei 8,5 bis 10 und insbesondere 8,5 bis 9,0. Dabei wird üblicherweise Lime eingesetzt, wobei dieser in Mengen zwischen 0,5 und 10 lb/bbl (0,06 - 1,20 g/cm³) Invert-Bohrspülung eingesetzt wird. In Abhängigkeit von der verwendeten Ölphase kann es aber notwendig sein, diesen Wert deutlich zu verringern um unerwünschte Hydrolysereaktionen der Ölphase zu unterdrücken. Es ist dann vorteilhaft den Gehalt an freiem Lime in der Spülung unterhalb von 2 lb/bbl (0,224 g/cm³) einzustellen. Alternativ können auch protonierte Aminverbindungen als Ersatz für eine klassische Alkalireserve verwendet werden. Derartige Verbindungen werden in der WO 00/27945, US 5,977,031, US 5,985,800, US 5,909,779, US 5,905,061 sowie US 5,888,944 beschrieben. Solche Systeme sind frei von Kalk (Lime).

Weitere Additive, die in den erfindungsgemäßen Bohrspülmitteln enthalten sein können, sind Verdicker g), vorzugsweise organophiler Bentonit. Weiterhin werden Emulgatoren c) eingesetzt, wobei hier zu Einzelheiten auf den bereits oben zitierten Stand er Technik verwiesen wird. Fluid-Ioss Additive, beispielsweise organophiler Lignit e) gehören ebenfalls zu den üblicherweise verwendeten Additiven. Auch Beschwerungsmittel d) sind übliche Bestandteile von Invert-Bohrspülungssystemen, um deren spezifisches Gewicht auf Werte im Bereich von 1,2 bis 2,5 einzustellen. Diese Dichten sind notwendig um der Spülung die notwendige Tragfähigkeit für das Bohrklein (Cuttings) zu geben. Geeignet und vorzugsweise verwendet wird Bariumsulfat (Baryt). Auch Glykole und/oder Glycerin können den Systemen zugesetzt werden. Weiterhin können Dispersionshilfsmittel, Korrosionsinhibitoren und/oder Entschäumer mitverwendet werden. Diese und andere geeigneten Hilfsmittel und Additive werden in dem Fachmann bekannten Mengen und in Abhängigkeit von den Besonderheiten der jeweiligen Bohrung verwendet. Zu Einzelheiten sei auf das einschlägige Schrifttum, hier z.B. das "Manual of Drilling Fluid Technologies", der Baroid/NL Industries Inc., 1979, Kapitel 3, verwiesen.

Die Invert-Bohrspülungen weisen vorzugsweise eine Plastische Viskosität im Bereich von 10 bis 70 mPas und eine Fließgrenze (Yield Point YP) im Bereich von 5 bis 60 lb/100 ft² (2,39 - 28,73 Pa) auf. Es wurde auch gefunden, dass durch den Gehalt an erfindungsgemäßer Elektrolytmischung in der Bohrspülung deren Rheologie wirksam beeinflusst werden kann, wobei hiermit ein Verdünnungseffekt möglich wird. Beansprucht wird daher die Verwendung einer Mischung Calcium- und Magnesiumacetat zur Beeinflussung der Rheologie von Invert-Bohrspülungen.

### Beispiele

Zur Überprüfung von Elektrolyten in Invert-Spülungssystemen wurden die folgenden Rahmen-Rezepturen hergestellt und deren rheologische Eigenschaften mit unterschiedlichen Canier-Fluids und Elektrolyten geprüft:

**Tabelle 1:**

| | **W/O- Verhältnis** | **Dichte** | **W/O- Verhältnis** | **Dichte** | **W/O- Verhältnis** | **Dichte** |
|---|---|---|---|---|---|---|
| | **70/30** | **13,1 lb/gal (1.569 g/cm**^{**3**}**)** | **80/20** | **16,7 lb/gal (2,0 g/cm**^{**3**}**)** | **90/10** | **18,3 lb/gal (2.19 g/cm**^{**3**}**)** |
| **Carrier-Fluid** | 0,512 (bbl) | 179.2 ml | 0,474 (bbl) | 165.9 ml | 0,491 (bbl) | 171.85 ml |
| **Emulgator** | 12 (lb) | 12g | 12 (lb) | 12g | 15 (lb) | 15g |
| **Duratone HT** | 6 (lb) | 6g | 10 (lb) | 10g | 10 (lb) | 10g |
| **Lime** | 1 (lb) | 1g | 1 (lb) | 1 g | 1 (lb) | 1g |
| **Geltone II** | - (lb) | - | 0,75 (lb) | 0,75 g | 1 (lb) | 1g |
| **Wasser** | 0,22 (bbl) | 77 ml | 0,12 (lb) | 42 ml | 0,055 (lb) | 19.25 ml |
| **Elektrolyt** | 33 (lb) | 33 g | 18,5 (lb) | 18.5 g | 8 (lb) | 8g |
| **BaSO**_{**4**} | 266 (lb) | 266 g | 470 (lb) | 470 g | 570 (lb) | 570g |
| **OMC 42** | 1 (lb) | 1g | 3 (lb) | 3g | - (lb) | - |
| **OMC 3** | - (lb) | - | 1 (lb) | 1g | - (lb) | - |

Diese Systeme enthielten als Carrier-Fluid Petrofree® (Fa. Cognis, Ester aus gesättigten C12 bis C16 Monocarbonsäuren mit 2-Ethylhexanol) oder Rilanit EHO (Fa. Cognis, Ester aus ungesättigten C18 Monocarbonsäuren mit 2-Ethylhexanol). Als Emulgator wurde EZ Mul NTE der Fa. Baroid eingesetzt. Duratone II der Fa. Baroid ist ein organophiler Lignit, der als fluid-loss Additiv eingesetzt wird. Geltone ist ein organophiler Bentonit der Fa. Baroid. OMC 3 und OMC 42 sind Produkte der Fa. Baroid, die als Dispersionshilfsmittel den Bohrspülungen zugesetzt werden.

Die rheologischen Kenndaten wurden nach 16-stündiger Alterung bei 250 °F (121° C) im Roller Oven am Fann 35 SR 12 gemessen und sind in den folgenden Tabellen 2 bis 4 wiedergegeben. AHR bzw. BHR stehen für "after bzw. before hot roling"

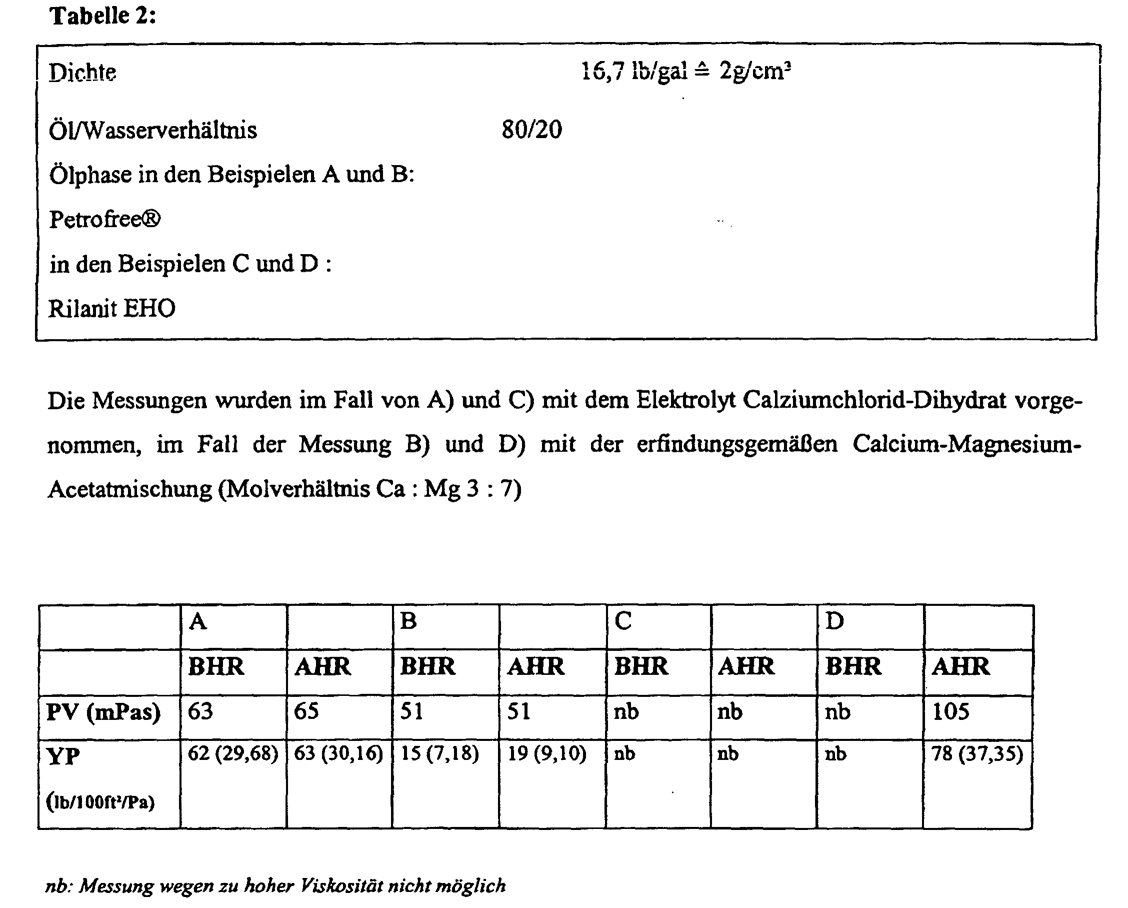

Man erkennt, daß durch den Einsatz der erfindungsgemäßen Salzmischungen die Rheologie der Spülungen nach Alterung verbessert ist gegenüber üblichen Systemen.

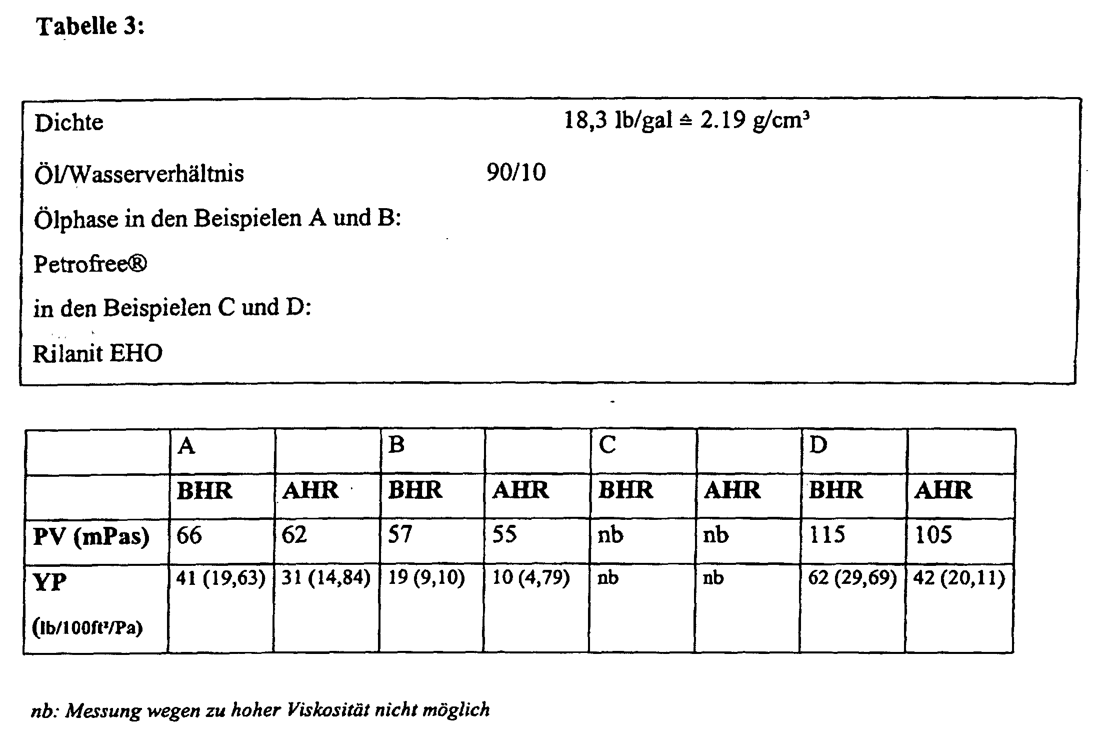

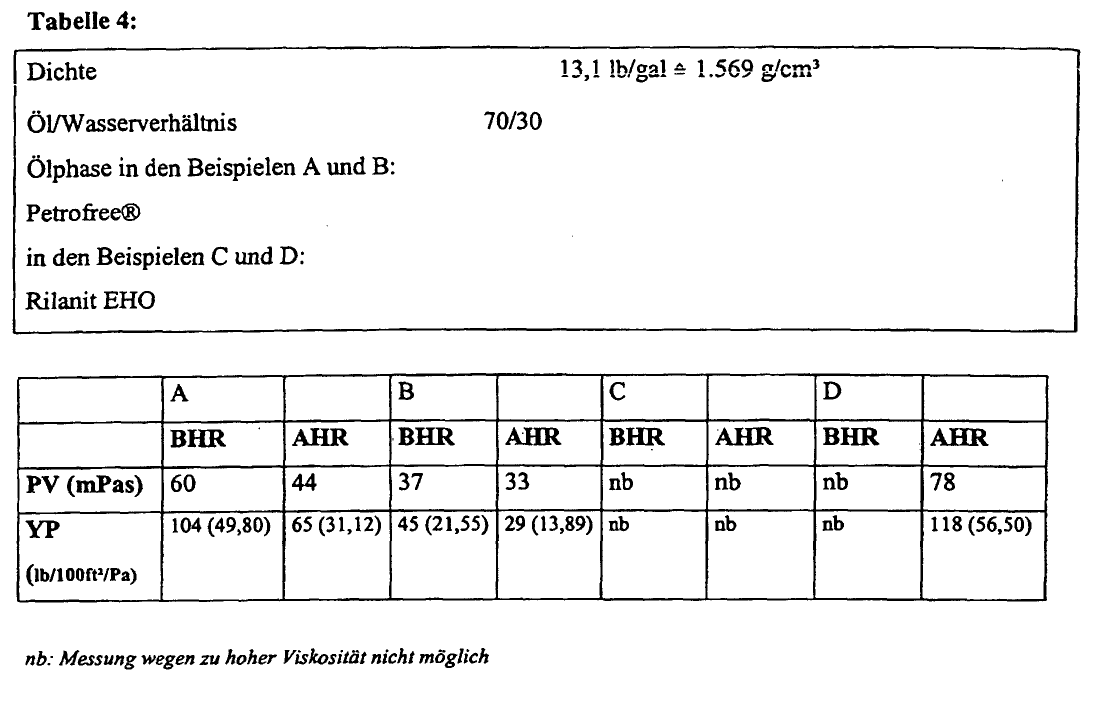

## Patentansprüche

1. Invert-Bohrspülung, enthalten
i) eine kontinuierliche Ölphase,
j) eine in der Ölphase dispers verteilte Wasserphase,
k) mindestens einen Emulgator,
l) mindestens ein Beschwerungsmittel,
m) mindestens ein Fluid-loss Additive,
n) mindestens ein Elektrolyt,
o) mindestens ein Verdicker,
p) optional weitere Additive,
**dadurch gekennzeichnet, daß** als Elektrolyt f) eine Mischung aus Calciumacetat und Magnesiumacetat enthalten ist.

2. Invert-Bohrspülung nach Anspruch 1, **dadurch gekennzeichnet, daß** die kontinuierliche Ölphase a) ganz oder teilweise gebildet wird aus der Gruppe der im Temperaturbereich von 0 bis 5 °C fließ- und pumpfähigen Verbindungen, die ausgewählt sind aus den Klassen
i) Carbonsäureestern der Formel (I)
R'-COO-R" (I)
wobei R' für einen gesättigten oder ungesättigten, linearen oder verzweigten Alkylrest mit 5 bis 23 C-Atomen steht und R" einen Alkylrest mit 1 bis 22 C-Atomen bedeutet, wobei der Rest R" gesättigt oder ungesättigt, linear oder verzweigt sein kann,
ii) linearen oder verzweigte Olefinen mit 8 bis 30 C-Atomen,
iii) wasserunlöslichen symmetrischen oder unsymmetrischen Ether aus einwertigen Alkoholen natürlichen oder synthetischen Ursprungs, wobei die Alkohole 1 bis 24 C-Atome enthalten können,
iv) wasserunlöslichen Alkohole der Formel (II)
R"'-OH (II)
v) wobei R''' für einen gesättigten, ungesättigten, linearen oder verzweigten Alkylrest mit 8 bis 24 C-Atomen steht,
vi) Kohlensäurediestern.

3. Invert-Bohrspülung nach den Ansprüchen 1 bis 2, **dadurch gekennzeichnet, daß** die kontinuierliche Ölphase a) ganz oder teilweise aus Verbindungen der Klasse i) gebildet wird.

4. Invert-Bohrspülung nach den Ansprüchen 1 bis 3, **dadurch gekennzeichnet, daß** die kontinuierliche Ölphase a) ganz oder teilweise aus Verbindungen der Klasse ii) gebildet wird.

5. Invert-Bohrspülung nach den Ansprüchen 1 bis 4, **dadurch gekennzeichnet, daß** die kontinuierliche Ölphase vollständig aus beliebigen Mischungen der Klassen i) und ii) gebildet wird.

6. Invert-Bohrspülung nach den Ansprüchen 1 bis 5, **dadurch gekennzeichnet, daß** das Gewichtsverhältnis der Komponenten a) zu b) im Bereich von 90 : 10 bis 50 : 50, vorzugsweise von 90 : 10 bis 70 : 30 und insbesondere von 80 : 20 bis 70 : 30 liegt.

7. Invert-Bohrspülung nach den Ansprüchen 1 bis 6, **dadurch gekennzeichnet, daß** als zusätzliches Addditiv Lime enthalten ist.

8. Invert-Bohrspülungen nach den Ansprüchen 1 bis 6, **dadurch gekennzeichnet, daß** als zusätzliches Additiv protonierte Amine enthalten sind und die Mitverwendung von Lime ausgeschlossen ist.

9. Invert-Bohrspülungen nach den Ansprüchen 1 bis 7, **dadurch gekennzeichnet, daß** sie eine Plastische Viskosität im Bereich von 10 bis 70 mPas und eine Fließgrenze (Yield Point YP) im Bereich von 5 bis 60 lb/100 ft² (2,35 bis 28,73 Pa) aufweisen.

10. Invert-Bohrspülung gemäß den Ansprüchen 1 bis 9, **dadurch gekennzeichnet, daß** sie den Elektrolyt f) in Mengen von 1 bis 15 Gew.-%, vorzugsweise 2 bis 12 und insbesondere 5 bis 10 Gew.-%, bezogen auf die gesamte Invert-Bohrspülung enthalten.

11. Invert-Bohrspülung nach den Ansprüchen 1 bis 10, **dadurch gekennzeichnet, daß** der Elektrolyt f) Calcium- und Magnesiumionen in einem Molverhältnis von 10 :1 bis 1 : 10 enthält.

12. Verwendung einer Mischung aus Calcium- und Magnesiumacetat als Elektrolyt zur Einstellung der Salinität von Invert-Bohrspülungen.

13. Verwendung einer Mischung Calcium-'und Magnesiumacetat zur Beeinflussung der Rheologie von Invert-Bohrspülungen.

## Claims

1. An invert drilling fluid containing
a) a continuous oil phase,
b) a water phase dispersed in the oil phase,
c) at least one emulsifier,
d) at least one weighting agent,
e) at least one fluid loss additive,
f) at least one electrolyte,
g) at least one thickener,
h) optionally other additives,
**characterized in that** the electrolyte f) is a mixture of calcium acetate and magnesium acetate.

2. An invert drilling fluid as claimed in claim 1, **characterized in that** the continuous oil phase a) is formed completely or partly from the group of compounds flowable and pumpable at 0 to 5°C selected from the following classes:
i) carboxylic acid esters corresponding to formula (I):
R'-COO-R" (I)
where R' is a saturated or unsaturated, linear or branched C₅₋₂₃ alkyl group and R" is a C₁₋₂₂ alkyl group which may be saturated or unsaturated, linear or branched,
ii) linear or branched C₈₋₃₀ olefins,
iii) water-insoluble, symmetrical or nonsymmetrical ethers of monohydric alcohols of natural or synthetic origin which may contain 1 to 24 carbon atoms,
iv) water-insoluble alcohols corresponding to formula (II):
R"'-OH (II)
where R"' is a saturated, unsaturated, linear or branched C₈₋₂₄ alkyl group,
v) vi) carbonic acid diesters.

3. An invert drilling fluid as claimed in claims 1 and 2, **characterized in that** the continuous oil phase a) is formed completely or partly from compounds of class i).

4. An invert drilling fluid as claimed in claims 1 to 3, **characterized in that** the continuous oil phase a) is formed completely or partly from compounds of class ii).

5. An invert drilling fluid as claimed in claims 1 to 4, **characterized in that** the continuous oil phase is formed completely from mixtures of classes i) and ii).

6. An invert drilling fluid as claimed in claims 1 to 5, **characterized in that** the ratio by weight of component a) to component b) is in the range from 90:10 to 50:50, preferably in the range from 90:10 to 70:30 and more particularly in the range from 80:20 to 70:30.

7. An invert drilling fluid as claimed in claims 1 to 6, **characterized in that** it contains lime as an additional additive.

8. An invert drilling fluid as claimed in claims 1 to 6, **characterized in that** it contains protonated amines as an additional additive but no lime.

9. An invert drilling fluid as claimed in claims 1 to 7, **characterized in that** it has a plastic viscosity of 10 to 70 mPas and a yield point YP of 5 to 60 lb/100 ft² (2.35 to 28.73 Pa).

10. An invert drilling fluid as claimed in claims 1 to 9, **characterized in that** it contains the electrolyte f) in quantities of 1 to 15% by weight, preferably in quantities of 2 to 12% by weight and more particularly in quantities of 5 to 10% by weight, based on the invert drilling fluid as a whole.

11. An invert drilling fluid as claimed in claims 1 to 10, **characterized in that** the electrolyte f) contains calcium and magnesium ions in a molar ratio of 10:1 to 1:10.

12. The use of a mixture of calcium and magnesium acetate as an electrolyte for adjusting the salinity of invert drilling fluids.

13. The use of a mixture of calcium and magnesium acetate for influencing the rheology of invert drilling fluids.

## Revendications

1. Produit de rinçage de forage inverse contenant
a) une phase huileuse continue,
b) une phase aqueuse répartie de manière dispersée dans la phase huileuse,
c) au moins un émulsifiant,
d) au moins d'un agent de charge,
e) au moins un réducteur de filtrat,
f) au moins un électrolyte,
g) au moins un épaississant,
h) facultativement d'autres additifs,
**caractérisé en ce qu'**
il contient comme électrolyte f) un mélange d'acétate de calcium et d'acétate de magnésium.

2. Produit de rinçage de forage inverse selon la revendication 1, **caractérisé en ce que**
la phase huileuse continue a) est formée entièrement ou partiellement à partir du groupe des composés fluides et pompables dans l'intervalle de température allant de 0 à 5°C, et qui sont choisis parmi les classes suivantes :
i) les esters d'acides carboxyliques de formule (I)
R'-COO-R" (I)
dans laquelle R' représente un radical alkyle linéaire ou ramifié, saturé ou insaturé, comportant de 5 à 23 atomes de carbone, et R" représente un radical alkyle comportant de 1 à 22 atomes de carbone, le radical R" pouvant être saturé ou insaturé, linéaire ou ramifié,
ii) les oléfines linéaires ou ramifiées comportant de 8 à 30 atomes de carbone,
iii) les éthers symétriques ou asymétriques, insolubles dans l'eau, d'alcools monovalents d'origine naturelle ou synthétique, les alcools pouvant contenir de 1 à 24 atomes de carbone,
iv) les alcools insolubles dans l'eau, de formule (II)
R"'-OH (II)
v) dans laquelle R"' représente un radical alkyle saturé, insaturé, linéaire ou ramifié comportant de 8 à 24 atomes de carbone,
vi) les diesters de l'acide carbonique.

3. Produit de rinçage de forage inverse selon les revendications 1 à 2, **caractérisé en ce que**
la phase huileuse continue a) est formée entièrement ou partiellement de composés de la classe i).

4. Produit de rinçage de forage inverse selon les revendications 1 à 3, **caractérisé en ce que**
la phase huileuse continue a) est formée entièrement ou partiellement de composés de la classe ii).

5. Produit de rinçage de forage inverse selon les revendications 1 à 4, **caractérisé en ce que**
la phase huileuse continue est formée entièrement de mélanges quelconques des classes i) et ii).

6. Produit de rinçage de forage inverse selon les revendications 1 à 5, **caractérisé en ce que**
le rapport pondéral des composants a) à b) se situe dans un intervalle allant de 90 : 10 à 50 : 50, de préférence de 90 : 10 à 70 : 30 et en particulier de 80 : 20 à 70 : 30.

7. Produit de rinçage de forage inverse selon les revendications 1 à 6, **caractérisé en ce qu'**
il contient de la chaux comme additif supplémentaire.

8. Produit de rinçage de forage inverse selon les revendications 1 à 6,
**caractérisé en ce qu'**
il contient des amines protonées comme additif supplémentaire, et l'utilisation simultanée de chaux est proscrite.

9. Produit de rinçage de forage inverse selon les revendications 1 à 7, **caractérisé en ce qu'**
il présente une viscosité plastique située dans un intervalle allant de 10 à 70 mPas et une limite de fluidité (Point d'écoulement PE - en anglais « Yield Point », YP) situé dans un intervalle allant de 2,35 à 28,73 Pa (5 à 60 lb/ 100 ft²).

10. Produit de rinçage de forage inverse selon les revendications 1 à 9, **caractérisé en ce qu'**
il contient l'électrolyte f) en quantités de 1 à 15 % en poids, de préférence de 2 à 12 et en particulier de 5 à 10 % en poids, par rapport à l'ensemble du produit de rinçage de forage inverse.

11. Produit de rinçage de forage inverse selon les revendications 1 à 10, **caractérisé en ce que**
l'électrolyte f) contient des ions calcium et magnésium dans un rapport molaire de 10 : 1 à 1 : 10.

12. Utilisation d'un mélange d'acétate de calcium et de magnésium, comme électrolyte pour le réglage de la salinité de produits de rinçage de forage inverses.

13. Utilisation d'un mélange d'acétate de calcium et de magnésium, pour agir sur la rhéologie des produits de rinçage de forage inverses.
